# EUROPEAN PATENT SPECIFICATION

(11) **EP 1 398 103 B1**
(45) Date of publication and mention of the grant of the patent: **15.11.2006**
(21) Application number: 03103356.6
(22) Date of filing: 11.09.2003
(51) Int. Cl.: B23D 31/00

(54) **Device and method for machining connecting rods**
Vorrichtung sowie Verfahren zum Bearbeiten von Pleueln
Dispositif ainsi que procédé pour la fabrication de bielles

(30) Priority: 13.09.2002 IT BO20020579
(43) Date of publication of application: 17.03.2004
(73) Proprietor: MAPE S.p.A, I-40053 Bazzano,(Bologna) (IT)
(72) Inventor: Piana, Stefano, 40060 Savigno (IT); Pederzini, Daniele, 40100 Bologna (IT)
(74) Representative: Boggio, Luigi

(56) References cited:
- EP-A- 1 036 622
- WO-A-95/28573
- DE-C- 19 841 027
- GB-A- 724 358
- PATENT ABSTRACTS OF JAPAN vol. 2000, no. 14, 5 March 2001 (2001-03-05) & JP 2000 310329 A (YAMAHA MOTOR CO LTD), 7 November 2000 (2000-11-07)

## Description

The present invention relates to a device and a method for machining connecting rods according to the preamble of claims 1 and 8. Such a device and such a method are disclosed in DE-C-19841027.

The present invention may be used to advantage for machining low casehardened steel connecting rods, to which the following description refers purely by way of example.

Here and hereinafter, low case hardened steel connecting rods are intended to mean connecting rods made of case hardened steel with a case depth of less than eight millimetres.

Connecting rods made of low case hardened steel have been proposed to enable them to better withstand the stress imposed by modern combustion engines.

Machining low case hardened steel connecting rods, however, poses various problems, owing, in particular, to the relatively high residual "ductility" of this type of material.

A connecting rod normally comprises a rod, and a big end in turn comprising an eye bounded by an inner annular surface of the big end. To fit the connecting rod to the engine and so insert the crankshaft through the eye, the big end is normally divided into two portions, a first of which remains attached to the rod, and the second of which is separated to form the so-called cap.

The big end is normally cut or, preferably, broken by traction into the two portions.

WO95/28573 discloses a process for fracture separating the bearing cover of a multi-part bearing arrangement, particularly in crankcases of internal-combustion engines.

Since the cap must eventually be reconnected to the first portion at assembly, the contact surfaces between the cap and the first portion must mate as accurately as possible to reduce the formation, during operation of the engine, of stress and/or deformation which may damage the connecting rod or other parts of the engine.

For this reason, the break must be as "fragile", i.e. result in as little inelastic deformation, as possible. In which connection, it is important to note that any deformation, even not in the area of the break, may still promote failure and stress during operation of the engine.

The break is normally made using a device comprising two traction members, which, in use, are inserted inside the eye and pulled apart to detach the cap from the first portion of the big end. The traction members have respective thrust surfaces in the form of a cylindrical sector, and which mate with said annular surface and have substantially identical angles of curvature.

Though long used for machining connecting rods of relatively high-carbon steel, attempts so far to apply the above device to low case hardened steel connecting rods have resulted in breaks of relatively poor "fragility" and therefore in parts substantially unsuitable for use in modern combustion engines.

It is an object of the present invention to provide a device for machining steel connecting rods, designed to eliminate the aforementioned drawbacks, and which at the same time is cheap and easy to produce.

According to the present invention, there is provided a device for machining steel connecting rods, as claimed in Claim 1.

The present invention also relates to a method of machining steel connecting rods.

According to the present invention, there is provided a method of machining steel connecting rods, as claimed in Claim 8.

A non-limiting embodiment of the invention will be described by way of example with reference to the accompanying drawings, in which:
Figure 1 shows a plan view of a connecting rod in accordance with the present invention;
Figure 2 shows a longitudinal section of a detail of the Figure 1 connecting rod;
Figure 3 shows a plan view of a connecting rod from which to form the Figure 1 connecting rod;
Figure 4 shows a view in perspective, with parts removed for clarity, of one embodiment of the device according to the present invention;
Figure 5 shows a lateral section of the Figure 4 device;
Figure 6 shows a plan view of parts of the Figure 4 device.

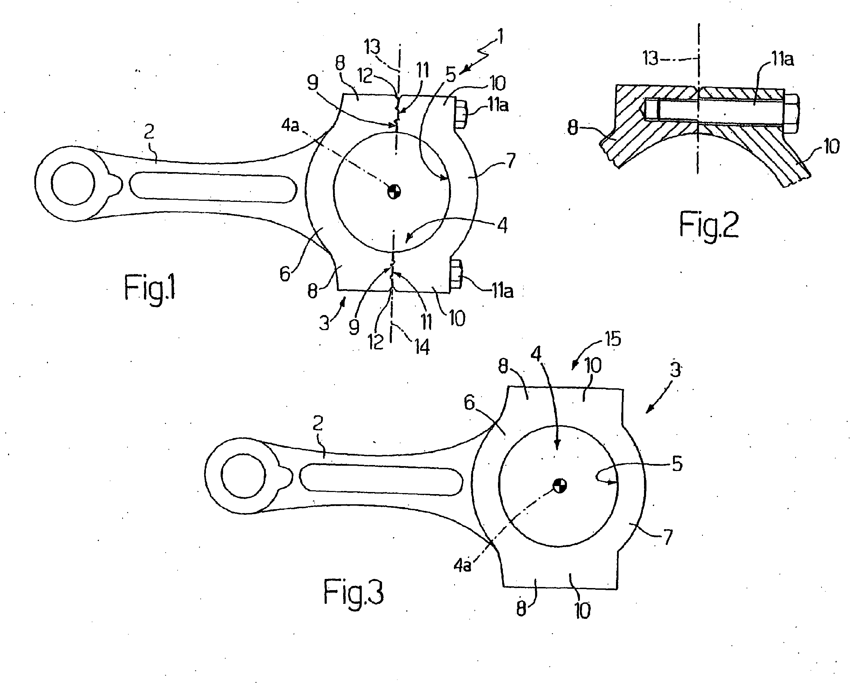

With reference to Figures 1 and 2, number 1 indicates as a whole a low case hardened steel connecting rod comprising a rod 2; and a big end 3 in turn having a cylindrical opening or eye 4, which has a longitudinal axis 4a substantially crosswise to rod 2, is defined laterally by an annular surface 5, and houses a portion of a crankshaft.

Big end 3 is divided into two portions: a first portion 6 integral with rod 2; and a removable cap 7. First portion 6 is saddle-shaped and forks into two legs 8, each having a respective end 9; and cap 7 is also saddle-shaped, and forks into two legs 10, each having a respective end 11.

Each end 9 is gripped to a respective end 11 by a relative bolt 11a, so that portion 6 and cap 7 define eye 4. Big end 3 also comprises two notches 12 formed at the outer edges of ends 9 and 11 and extending parallel to axis 4a.

In variations not shown, notches 12 may be formed at the bottom and/or top inner edges of ends 9 and 11.

Ends 9 and 11 include surfaces lying in two break planes 13 and 14 and formed by "fragile" breakage of a connecting rod 15 (Figure 3) on which notches 12 are formed beforehand. Break planes 13 and 14 are coplanar, and lie substantially in a diametrical plane (not shown) of eye 4 substantially crosswise to rod 2 and through notches 12.

In further embodiments not shown, break planes 13 and 14 may be at an angle to each other and/or need not lie in said diametrical plane.

Connecting rod 15 (Figure 3) is substantially identical with connecting rod 1, the only difference being that big end 3 has no notches 12 and is formed in one piece, i.e. with portion 6 integral with cap 7.

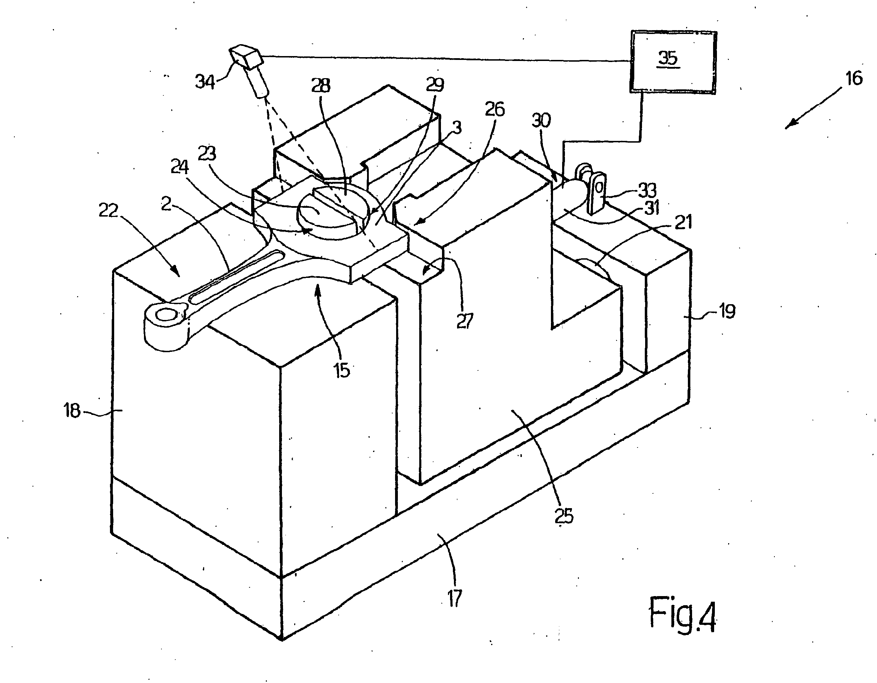

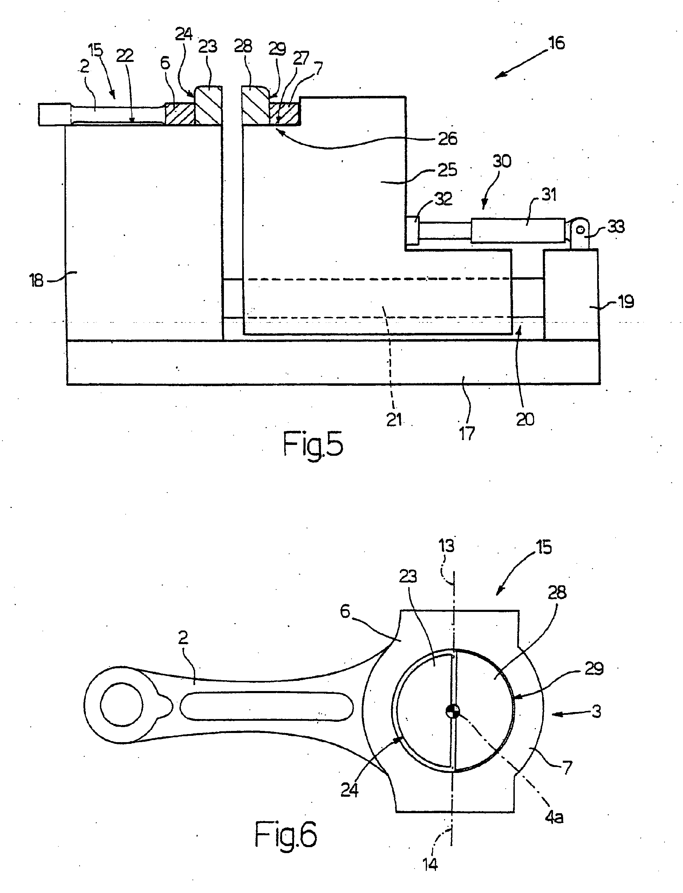

With reference to Figures 4 and 5, number 16 indicates as a whole a device for producing connecting rod 1 from connecting rod 15, and which comprises a rectangular parallelepiped-shaped bed 17 supporting two uprights 18 and 19 at opposite ends. Uprights 18 and 19 are substantially parallelepiped-shaped and connected by a horizontal guide 20 comprising two slide cylinders 21 (only one shown) extending longitudinally with respect to bed 17.

Upright 18 is defined at the top by a supporting surface 22 for supporting rod 2 and first portion 6, and which has a fixed traction pin 23 in the form of a vertical half-cylinder. Traction pin 23 is inserted inside eye 4 and is defined laterally by a thrust surface 24 in the form of a cylindrical sector and which mates with annular surface 5 of first portion 6.

Device 16 also comprises a slide 25 movable along horizontal guide 20 and having a seat 26 for housing cap 7. Seat 26 has a supporting surface 27 substantially coplanar with surface 22 and for supporting cap 7, and is fitted with a traction pin 28 in the form of a vertical half-cylinder.

Traction pin 28 is fitted integrally to slide 25, is inserted inside eye 4, and is defined laterally by a thrust surface 29 in the form of a cylindrical sector and which mates with annular surface 5 of cap 7.

As shown clearly in Figure 6, thrust surface 24 has a smaller radius of curvature than thrust surface 29. In preferred embodiments, the radius of curvature of annular surface 5 is greater than or equal to that of thrust surface 29. More specifically, the radius of curvature of annular surface 5 preferably ranges between 100% and 110% of the radius of curvature of thrust surface 29.

Preferably, the radius of curvature of thrust surface 24 ranges between 80% and 99%, in particular between 92% and 98%, of the radius of curvature of thrust surface 29. Particularly preferred embodiments are those in which the radius of curvature of thrust surface 24 is 97% of the radius of curvature of thrust surface 29.

Device 16 also comprises an actuating unit 30 for parting traction pins 23 and 28, and which comprises two horizontal hydraulic cylinders 31 connected at the front to slide 25 by means of a flange 32, and supported at the rear by a bracket 33 fitted to upright 19.

Device 16 also comprises a known laser source 34 (shown schematically) for making notches 12.

In actual use, connecting rod 15 is positioned so that traction pins 23 and 28 are inserted inside eye 4, cap 7 is housed inside seat 26, and rod 2 is supported on surface 22 and oriented substantially parallel to horizontal guide 20.

To increase the fragility of the low case hardened steel of connecting rod 15, connecting rod 15 is preferably cooled using known methods, e.g. by immersing it in liquid nitrogen before it is set up on the device.

Once connecting rod 15 is set up, laser source 34 is activated by a control unit 35 (shown schematically in Figure 4) to form notches 12.

At this point, actuating unit 30 is operated (also by control unit 35) to move slide 25 towards upright 19. At the same time, traction pins 23 and 28 are parted in a direction substantially parallel to rod 2, and thrust surfaces 24 and 29 mate with annular surface 5 until "fragile" breakage of big end 3 along break planes 13 and 14 is achieved.

In this connection, it should be pointed out that, during traction by traction pins 23 and 28, the particular geometric configuration of traction pins 23 and 28 provides for a relatively high concentration of mechanical stress in break planes 13 and 14. In particular, being connected to rod 2, first portion 6 is more rigid than cap 7, thus reducing inelastic deformation of big end 3 and, in particular, end surfaces 9 and 11.

Once cap 7 is detached from big end 3, connecting rod 1 can be machined, e.g. ground and lapped, in known manner.

## Claims

1. A device for machining steel connecting rods (15), each comprising a rod (2), and a big end (3) in turn comprising a first portion (6) connected integrally to the rod (2), a second portion (7) connected to said first portion (6), an eye (4), and an inner annular surface (5) defining the eye (4); the device (16) comprising a first traction member (23) which is inserted inside the eye (4) and has a first thrust surface (24) mating with said annular surface (5) at the first portion (6) and substantially in the form of a cylindrical sector having a respective radius of curvature, a second traction member (28) which is inserted inside the eye (4) and has a second thrust surface (29) mating with said annular surface (5) at the second portion (7) and substantially in the form of a cylindrical sector having a respective radius of curvature, and actuating means (30) for parting said first and said second traction member (23; 28) so as to break the second portion (7) away from the first portion (6); the device (16) comprising a supporting surface (22) for supporting the rod (2) and a seat (26) for housing the second portion (7); the first and the second traction members (23, 28) being fixed to the supporting surface (22) and the seat (26), respectively; the device (16) being **characterized in that** the radius of curvature of the first thrust surface (24) is smaller than the radius of curvature of the second thrust surface (29) .

2. A device as claimed in Claim 1, wherein said actuating means (30) part said first and said second traction member (23; 28) in a direction substantially parallel to the rod.

3. A device as claimed in Claim 1 or 2, wherein said annular surface (5) has a radius of curvature greater than the radius of curvature of the second thrust surface (29) .

4. A device as claimed in one of the foregoing Claims, and comprising a laser source (34) for forming at least one notch (12) in said big end (3), between said first and said second portion (6; 7).

5. A device as claimed in one of the foregoing Claims, wherein the radius of curvature of the first thrust surface (24) ranges between 80% and 99% of the radius of curvature of the second thrust surface (29).

6. A device as claimed in one of Claims 1 to 4, wherein the radius of curvature of the first thrust surface (24) ranges between 92% and 98% of the radius of curvature of the second thrust surface (29).

7. A device as claimed in one of Claims 1 to 4, wherein the radius of curvature of the first thrust surface (24) is 97% of the radius of curvature of the second thrust surface (29).

8. A method of machining steel connecting rods (15), each comprising a rod (2), and a big end (3) in turn comprising a first portion (6) connected integrally to the rod (2), a second portion (7) connected to said first portion (6), an eye (4), and an inner annular surface (5) defining the eye (4); the method comprising a traction step wherein relative withdrawal motion is imparted to a first thrust surface (24) substantially in the form of a cylindrical sector and which mates with said annular surface (5) at the first portion (6), and to a second thrust surface (29) substantially in the form of a cylindrical sector and which mates with said annular surface (5) at the second portion (7), so as to break the second portion (7) away from the first portion (6); the method being **characterized in that** said first and said second thrust surface (24; 29) each have a respective radius of curvature; the radius of curvature of the first thrust surface (24) being smaller than the radius of curvature of the second thrust surface (29).

9. A method as claimed in Claim 8, wherein the relative withdrawal motion of said first and said second thrust surface (24; 29) is in a direction substantially parallel to the rod (2) .

10. A method as claimed in Claim 8 or 9, and comprising a notching step to form at least one notch (12) in said big end (3), between said first and said second portion (6; 7); said notching step preceding said traction step.

11. A method as claimed in Claim 10, wherein said notch is formed by means of a laser beam.

12. A method as claimed in one of Claims 8 to 11, wherein said annular surface (5) has a radius of curvature greater than the radius of curvature of the second thrust surface (29).

13. A method as claimed in one of Claims 8 to 12, wherein the radius of curvature of the first thrust surface (24) ranges between 92% and 98% of the radius of curvature of the second thrust surface (29).

14. A method as claimed in one of Claims 8 to 13, and comprising a cooling step to cool the connecting rod (15); said cooling step preceding said traction step.

## Patentansprüche

1. Vorrichtung zum Bearbeiten von Stahlpleueln bzw. -pleuelstangen (15), die jeweils eine Stange (2) und ein erweitertes Ende (3) umfassen, das seinerseits einen ersten Abschnitt (6), der integral mit der Stange (2) verbunden ist, einen zweiten Abschnitt (7), der mit dem ersten Abschnitt (6) verbunden ist, ein Auge (4) sowie eine innere ringförmige Oberfläche (5), die das Auge (4) festlegt, umfaßt, wobei die Vorrichtung (16) ein erstes Zugelement (23), das in das Auge (4) eingesetzt ist und eine erste Schubfläche (24) aufweist, die mit der Ringfläche (5) am ersten Abschnitt (6) zusammenpasst und im wesentlichen die Form eines zylindrischen Sektors mit einem jeweiligen Krümmungsradius aufweist, ein zweites Zugelement (28), das in das Auge (4) eingesetzt ist und eine zweite Schubfläche (29) aufweist, die mit der Ringfläche (5) am zweiten Abschnitt (7) zusammenpasst und im wesentlichen die Form eines zylindrischen Sektors mit einem jeweiligen Krümmungsradius aufweist, sowie Betätigungsmittel (30) zum Auseinanderbewegen des ersten und zweiten Zugelements (23;28) derart, dass der zweite Abschnitt (7) von dem ersten Abschnitt (6) losgebrochen wird, umfaßt, wobei die Vorrichtung (16) ferner eine Halterungsfläche (22) zum Haltern der Stange (2) und einen Sitz (26) zum Aufnehmen des zweiten Abschnitts (7) umfaßt und die ersten und zweiten Zugelemente (23,28) an der Halterungsfläche (22) bzw. dem Sitz (26) befestigt sind, wobei die Vorrichtung (16) **dadurch gekennzeichnet ist, dass** der Krümmungsradius der ersten Schubfläche (24) kleiner ist als der Krümmungsradius der zweiten Schubfläche (29).

2. Vorrichtung nach Anspruch 1, wobei die Betätigungsmittel (30) das erste und zweite Zugelement (23;28) in einer Richtung im wesentlichen parallel zu der Stange auseinander bewegen.

3. Vorrichtung nach Anspruch 1 oder 2, wobei die Ringfläche (5) einen größeren Krümmungsradius aufweist als der Krümmungsradius der zweiten Schubfläche (29).

4. Vorrichtung nach einem der vorangehenden Ansprüche, umfassend eine Laserquelle (34) zum Ausbilden mindestens einer Einkerbung (12) in dem erweiterten Ende (3) zwischen dem ersten und zweiten Abschnitt (6;7).

5. Vorrichtung nach einem der vorangehenden Ansprüche, wobei der Krümmungsradius der ersten Schubfläche (24) zwischen 80% und 99% des Krümmungsradius der zweiten Schubfläche (29) beträgt.

6. Vorrichtung nach einem der Ansprüche 1 bis 4, wobei der Krümmungsradius der ersten Schubfläche (24) zwischen 92% und 98% des Krümmungsradius der zweiten Schubfläche (29) beträgt.

7. Vorrichtung nach einem der Ansprüche 1 bis 4, wobei der Krümmungsradius der ersten Schubfläche (24) 97% des Krümmungsradius der zweiten Schubfläche (29) beträgt.

8. Verfahren zum Bearbeiten von Stahlpleueln (15), die jeweils umfassend eine Stange (2) und ein erweitertes Ende (3) umfassen, das seinerseits einen ersten Abschnitt (6), der integral mit der Stange (2) verbunden ist, einen mit dem ersten Abschnitt (6) verbundenen zweiten Abschnitt (7), ein Auge (4) und eine das Auge (4) festlegende innere Ringfläche (5) umfaßt, wobei das Verfahren einen Ziehschritt umfaßt, bei dem einer ersten Schubfläche (24) im wesentlichen in der Form eines zylindrischen Sektors, die mit der Ringfläche (5) am ersten Abschnitt (6) zusammenpasst, und einer zweiten Schubfläche (29) im wesentlichen in der Form eines zylindrischen Sektors, die mit der Ringfläche (5) am zweiten Abschnitt (7) zusammenpasst, eine Relativ-Rückziehbewegung vermittelt wird, so dass der zweite Abschnitt (7) von dem ersten Abschnitt (6) losgebrochen wird, wobei das Verfahren **dadurch gekennzeichnet ist, dass** die erste und die zweite Schubfläche (24;29) je einen jeweiligen Krümmungsradius aufweisen, wobei der Krümmungsradius der ersten Schubfläche (24) kleiner ist als der Krümmungsradius der zweiten Schubfläche (29).

9. Verfahren nach Anspruch 8, wobei die relative Rückziehbewegung der ersten und zweiten Schubfläche (24;29) in einer Richtung im wesentlichen parallel zu der Stange (2) stattfindet.

10. Verfahren nach Anspruch 8 oder 9, mit einem Einkerbungsschritt zum Ausbilden mindestens einer Einkerbung (12) in dem erweiterten Ende (3) zwischen dem ersten und zweiten Abschnitt (6;7), wobei der Einkerbungsschritt dem Ziehschritt vorausgeht.

11. Verfahren nach Anspruch 10, wobei die Einkerbung mittels eines Laserstrahls gebildet wird.

12. Verfahren nach einem der Ansprüche 8 bis 11, wobei die Ringfläche (5) einen größeren Krümmungsradius hat als der Krümmungsradius der zweiten Schubfläche (29).

13. Verfahren nach einem der Ansprüche 8 bis 12, wobei der Krümmungsradius der ersten Schubfläche (24) zwischen 92% und 98% des Krümmungsradius der zweiten Schubfläche (29) beträgt.

14. Verfahren nach einem der Ansprüche 8 bis 13, umfassend einen Kühlschritt zum Kühlen der Verbindungsstange bzw. des Pleuels (15), wobei der Kühlschritt dem Ziehschritt vorangeht.

## Revendications

1. Dispositif destiné à usiner des bielles en acier (15), comprenant chacune une tige (2), et une tête de bielle (3) comprenant à son tour une première partie (6) reliée de façon solidaire à la tige (2), une seconde partie (7) reliée à ladite première partie (6), un oeillet (4), et une surface annulaire intérieure (5) définissant l'oeillet (4), le dispositif (16) comprenant un premier élément de traction (23) qui est inséré à l'intérieur de l'oeillet (4) et présente une première surface de poussée (24) s'accouplant avec ladite surface annulaire (5) au niveau de ladite première partie (6) et sensiblement sous la forme d'un secteur cylindrique ayant un rayon de courbure respectif, un second élément de traction (28) qui est inséré à l'intérieur de l'oeillet (4) et présente une seconde surface de poussée (29) s'accouplant avec ladite surface annulaire (5) au niveau de la seconde partie (7) et sensiblement sous la forme d'un secteur cylindrique ayant un rayon de courbure respectif, et un moyen d'actionnement (30) destiné à séparer lesdits premier et second éléments de traction (23 ; 28) de façon à détacher la seconde partie (7) de la première partie (6), le dispositif (16) comprenant une surface de support (22) destinée à supporter la tige (2) et un siège (26) destiné à recevoir la seconde partie (7), les premier et second éléments de traction (23, 28) étant fixés respectivement à la surface de support (22) et au siège (26), le dispositif (16) étant **caractérisé en ce que** le rayon de courbure de la première surface de poussée (24) est inférieur au rayon de courbure de la seconde surface de poussée (29).

2. Dispositif selon la revendication 1, dans lequel ledit moyen d'actionnement (30) sépare lesdits premier et second éléments de traction (23 ; 28) dans une direction sensiblement parallèle à la tige.

3. Dispositif selon la revendication 1 ou 2, dans lequel ladite surface annulaire (5) présente un rayon de courbure plus important que le rayon de courbure de la seconde surface de poussée (29).

4. Dispositif selon l'une des revendications précédentes, et comprenant une source laser (34) destinée à former au moins une encoche (12) dans ladite tête de bielle (3), entre lesdites première et seconde parties (6 ; 7).

5. Dispositif selon l'une des revendications précédentes, dans lequel le rayon de courbure de la première surface de poussée (24) se situe entre 80 % et 99 % du rayon de courbure de la seconde surface de poussée (29).

6. Dispositif selon l'une des revendications 1 à 4, dans lequel le rayon de courbure de la première surface de poussée (24) se situe entre 92 % et 98 % du rayon de courbure de la seconde surface de poussée (29).

7. Dispositif selon l'une des revendications 1 à 4, dans lequel le rayon de courbure de la première surface de poussée (24) est égal à 97 % du rayon de courbure de la seconde surface de poussée (29).

8. Procédé d'usinage de bielles en acier (15), comprenant chacune une tige (2), et une tête de bielle (3) comprenant à son tour une première partie (6) reliée de façon solidaire à la tige (2), une seconde partie (7) reliée à ladite première partie (6), un oeillet (4), et une surface annulaire intérieure (5) définissant l'oeillet (4), le procédé comprenant une étape de traction dans laquelle un mouvement de retrait relatif est appliqué à une première surface de poussée (24) sensiblement sous la forme d'un secteur cylindrique et qui s'accouple avec ladite surface annulaire (5) au niveau de la première partie (6), et à une seconde surface de poussée (29) sensiblement sous la forme d'un secteur cylindrique et qui s'accouple avec ladite surface annulaire (5) au niveau de la seconde partie (7), de façon à détacher la seconde partie (7) de la première partie (6), le procédé étant **caractérisé en ce que** lesdites première et seconde surfaces de poussée (24 ; 29) ont chacune un rayon de courbure respectif, le rayon de courbure de la première surface de poussée (24) étant inférieur au rayon de courbure de la seconde surface de poussée (29).

9. Procédé selon la revendication 8, dans lequel le mouvement de retrait relatif desdites première et seconde surfaces de poussée (24 ; 29) se fait dans une direction sensiblement parallèle à la tige (2).

10. Procédé selon la revendication 8 ou 9, et comprenant une étape de formation d'encoche afin de former au moins une encoche (12) dans ladite tête de bielle (3), entre lesdites première et seconde parties (6 ; 7), ladite première étape de formation d'encoche précédant ladite étape de traction.

11. Procédé selon la revendication 10, dans lequel ladite encoche est formée au moyen d'un faisceau laser.

12. Procédé selon l'une des revendications 8 à 11, dans lequel ladite surface annulaire (5) présente un rayon de courbure supérieur au rayon de courbure de la seconde surface de poussée (29).

13. Procédé selon l'une des revendications 8 à 12, dans lequel le rayon de courbure de la première surface de poussée (24) se situe entre 92 % et 98 % du rayon de courbure de la seconde surface de poussée (29).

14. Procédé selon l'une des revendications 8 à 13, comprenant une étape de refroidissement pour refroidir la tête de bielle (15), ladite étape de refroidissement précédant ladite étape de traction.
